# EUROPÄISCHE PATENTSCHRIFT

(11) **EP 4 402 055 B1**
(45) Veröffentlichungstag und Bekanntmachung des Hinweises auf die Patenterteilung: **10.12.2025**
(21) Anmeldenummer: 22786895.7
(22) Anmeldetag: 13.09.2022
(51) Int. Cl.: B64U 10/14, B64U 30/24, B64U 30/297, B64U 40/10, B64U 50/33, B64C 29/00

(54) **FLUGGERÄT**
AIRCRAFT
AÉRONEF

(30) Priorität: 13.09.2021 DE 202021104932 U
(43) Veröffentlichungstag der Anmeldung: 24.07.2024
(73) Patentinhaber: Orthodrone GmbH, 24118 Kiel (DE)
(72) Erfinder: KLUSAK, Juri Niklas, 24118 Kiel (DE); LIECKFELDT, Nils, 24109 Melsdorf (DE); DENECKE, Mirko Jesper, 27568 Bremerhaven (DE); GURGEL, Max-Christoph, 24118 Kiel (DE); SCHOCK, Sebastian, 24217 Bendfeld (DE); AVERY, Christine Elizabeth, 24118 Kiel (DE); TEEGE, Julian Ärwin, 24943 Flensburg (DE); DRUMMER, Clara Andrea, 24116 Kiel (DE)
(74) Vertreter: Eisenführ Speiser
(86) Internationale Anmeldenummer: PCT/EP2022/075454
(87) Internationale Veröffentlichungsnummer: WO 2023/037014

(56) Entgegenhaltungen:
- DE-A1- 102013 021 884
- JP-A- 2020 026 270
- US-A1- 2018 281 941
- US-A1- 2020 023 964
- US-A1- 2020 140 080

## Beschreibung

Die Erfindung betrifft ein Fluggerät, insbesondere Drohne, mit einem Tragkörper und mindestens zwei am Tragkörper voneinander beabstandet angeordneten Propulsionsanordnungen, die ausgebildet sind, einen Propulsionsschub in einer Propulsionsrichtung zu erzeugen.

Ein derartiges Fluggerät ist aus dem Stand der Technik bekannt. Dabei gibt es beispielsweise zum einen Ausführungen, bei denen der Tragkörper den Rumpfkörper oder zumindest einen Teil des Rumpfkörpers bildet und somit eine Nutzlast beispielsweise eine Kamera und/oder Messsensoren aufnimmt. Zum anderen gibt es aber auch Ausführungen, bei denen separat ein Rumpfkörper vorgesehen ist, der am Tragkörper angeordnet ist.

DE 10 2013 021 884 A1 offenbart ein Fluggerät mit einer H-förmigen Tragstruktur, wobei zwei mit einer Verbindungsstrebe verbundenden Tragstrebenelementen um die X-Achse verschwenkbar sind, und Rotorblattanordnungen an den Enden der Tragstrebenelementen um die Y-Achse verschwenkbar sind.

Es ist eine Aufgabe der vorliegenden Erfindung, das Fluggerät hinsichtlich seiner Flugstabilisierung zu verbessern.

Diese Aufgabe wird gemäß einem ersten Aspekt der vorliegenden Erfindung gelöst mit einem Fluggerät, insbesondere Drohne, nach Anspruch 1.

Dadurch, dass erfindungsgemäß die Propulsionsanordnungen am Tragkörper unabhängig voneinander jeweils um eine winklig zur Propulsionsrichtung verlaufende erste Schwenkachse schwenkbar gelagert und mithilfe des ersten Stellantriebes unabhängig voneinander um die erste Schwenkachse verschwenkbar sind, lässt sich auf besonders vorteilhafte Weise eine optimale Ausbalancierung und somit eine sichere Flugstabilisierung erzielen. Dabei übernimmt die erste Schwenkachse insbesondere die Funktion einer Nick- bzw. Pitch-Achse. Auch wenn nur von einem ersten Stellantrieb die Rede ist, so ist der erste Stellantrieb derart aufgebaut, dass er die Propulsionsanordnungen unabhängig voneinander mit einer Schwenkbewegung beaufschlagt. Vorzugsweise ist für mindestens eine der mindestens zwei am Tragkörper vorhandenen beabstandet angeordneten Propulsionsanordnungen ein separater, eine Komponente des ersten Stellantriebes bildender Antrieb vorgesehen, der mindestens zwei Motoren mit Getriebe zur Erzielung einer Redundanz und Eliminierung von Getriebespiel sowie eine Bremse, die das Getriebe blockiert und insbesondere mit Elektromagneten eingeschaltet wird, aufweist; selbstverständlich sind aber auch andere Antriebslösungen für die Propulsionsanordnungen denkbar.

Bevorzugte Ausführungsbeispiele und Weiterbildungen des ersten erfindungsgemäßen Aspektes sind in den abhängigen Ansprüchen 2 bis 19 angegeben.

Bevorzugt bleibt die relative Orientierung der Propulsionsrichtung der Propulsionsanordnungen in Bezug auf eine rechtwinklig gegenüber der ersten Schwenkachse aufgespannte virtuelle Schwenkebene in jeder Schwenklage der Propulsionsanordnungen konstant. Dies bedeutet, dass eine zusätzliche Verschwenkung der Propulsionsanordnungen um eine winklig gegenüber der ersten Schwenkachse verlaufende weitere Schwenkachse ausgeschlossen ist, sodass die Propulsionsanordnungen lediglich um die erste Schwenkachse verschwenkbar sind und somit in diesem Fall diese Schwenkbewegung die einzige Schwenkbewegung der Propulsionsanordnung bildet.

Bevorzugt sind die Propulsionsanordnungen am Tragkörper um eine im Wesentlichen rechtwinklig zur Propulsionsrichtung verlaufende erste Schwenkachse schwenkbar gelagert.

Werden die beiden zuvor erwähnten bevorzugten Ausführungen miteinander kombiniert, führt dies dazu, dass die Propulsionsrichtung der Propulsionsanordnungen in der rechtwinklig gegenüber der ersten Schwenkachse aufgespannten virtuellen Schwenkebene liegt oder in jeder Schwenkstellung der Propulsionsanordnungen parallel zu dieser virtuellen Schwenkebene orientiert ist.

Zweckmäßigerweise sind die Propulsionsanordnungen um eine gemeinsame erste Schwenkachse schwenkbar gelagert. Hiernach fällt also die erste Schwenkachse der einen Propulsionsanordnung mit der ersten Schwenkachse der anderen Propulsionsanordnung zusammen, wobei gleichwohl die Propulsionsanordnungen unabhängig voneinander um die gemeinsame erste Schwenkachse schwenkbar gelagert bleiben.

Bevorzugt weist mindestens eine Propulsionsanordnung mindestens einen Propulsionsantrieb auf, der ausgebildet ist, den Propulsionsschub in Propulsionsrichtung zu erzeugen.

Bei einem weiteren bevorzugten Ausführungsbeispiel weist mindestens eine Propulsionsanordnung ein Tragelement und zwei voneinander beabstandet am Tragelement angeordnete Propulsionsantriebe auf, wobei das Tragelement an einer Stelle zwischen den beiden Propulsionsantrieben um die erste Schwenkachse schwenkbar gelagert ist. Dieses Tragelement ist bevorzugt als Arm ausgestaltet. Bei einer Weiterbildung dieses Ausführungsbeispiels ist das Tragelement an einer Stelle, die im Wesentlichen den gleichen Abstand zu den beiden Propulsionsantrieben aufweist, um die erste Schwenkachse gelagert, wodurch sich eine im Wesentlichen mittige Lagerung des Tragelementes am Tragkörper in Bezug auf die Propulsionsantriebe ergibt.

Bei einer Weiterbildung des zuvor erwähnten Ausführungsbeispiels bleibt die relative Orientierung der Propulsionsrichtung der Propulsionsantriebe gegenüber dem Tragelement in jeder Schwenklage der Propulsionsanordnungen konstant. Dies bedeutet, dass eine zusätzliche individuelle Verschwenkung der Propulsionsantriebe gegenüber dem Tragelement ausgeschlossen ist, so dass die Propulsionsantriebe einer Propulsionsanordnung lediglich um die erste Schwenkachse verschwenkbar sind und somit in diesem Fall diese Schwenkbewegung die einzige Schwenkbewegung der Propulsionsanordnung und deren Propulsionsantriebe bildet.

Zweckmäßigerweise kann mindestens eine Propulsionsanordnung mindestens zwei Propulsionsantriebe aufweisen, deren Propulsionsrichtungen parallel zueinander orientiert sind.

Des Weiteren kann mindestens ein Propulsionsantrieb ein um eine Rotationsachse angetriebener Rotor sein, wobei die Rotationsachse die Propulsionsrichtung definiert. Alternativ oder zusätzlich kann mindestens ein Propulsionsantrieb eine Turbine sein. Ebenfalls sind grundsätzlich weitere Ausgestaltungen des Propulsionsantriebs denkbar.

Wird als Propulsionsantrieb ein um eine Rotationsachse drehbarer Rotor verwendet, kann bevorzugt die Rotationsachse als Bezugspunkt genommen werden, indem das Tragelement an einer Stelle, die sich im Wesentlichen in gleichem Abstand zu den Rotationsachsen der Rotoren befindet, um die erste Schwenkachse schwenkbar gelagert ist.

Vorzugsweise ist eine erste Sensoreinrichtung vorgesehen und ausgebildet, die Schwenkstellung der Propulsionsanordnungen im Raum und/oder gegenüber dem Tragkörper zu erfassen, und ist eine Steuereinrichtung vorgesehen und ausgebildet, unter Verwendung der Signale von der ersten Sensoreinrichtung den ersten Stellantrieb so anzusteuern, dass die Propulsionsanordnungen eine bestimmte Schwenkstellung im Raum und/oder gegenüber dem Tragkörper einnehmen.

Erfindungsgemäss weist das Fluggerät nicht nur den bereits angesprochenen Tragkörper auf, sondern ist zusätzlich mit einem separaten Rumpfkörper versehen, der am Tragkörper um eine zweite Schwenkachse schwenkbar gelagert ist. Mit dieser erfindungsgemäßen Maßnahme lässt sich insbesondere eine optimale Ausbalancierung des Rumpfkörpers erzielen, was ebenfalls zur gewünschten sicheren Flugstabilisierung beiträgt. Dabei übernimmt die zweite Schwenkachse insbesondere die Funktion einer Rollachse.

Vorzugsweise ist der Rumpfkörper an einer Stelle des Tragkörpers schwenkbar gelagert, welche sich im Wesentlichen im gleichen Abstand zu den beiden Propulsionsanordnungen befindet. Hiernach verläuft die zweite Schwenkachse im Wesentlichen in der Mitte zwischen den beiden Propulsionsanordnungen und ist somit der Rumpfkörper im Wesentlichen in der Mitte am Tragkörper und somit im Wesentlichen mittig zwischen den beiden voneinander beabstandeten Propulsionsanordnungen gelagert.

Vorzugsweise ist die zweite Schwenkachse winklig, bevorzugt im Wesentlichen rechtwinklig, gegenüber der Propulsionsrichtung der Propulsionsanordnungen orientiert.

Bei einem weiteren bevorzugten Ausführungsbeispiel ist eine zweite Sensoreinrichtung vorgesehen und ausgebildet, die Schwenkstellung des Tragkörpers im Raum und/oder gegenüber dem Rumpfkörper zu erfassen, und ist eine Steuereinrichtung vorgesehen und ausgebildet, unter Verwendung der Signale von der zweiten Sensoreinrichtung den zweiten Stellantrieb so anzusteuern, dass der Tragkörper eine bestimmte Schwenkstellung im Raum und/oder gegenüber dem Rumpfkörper einnimmt.

Bei einer Weiterbildung dieses Ausführungsbeispiels ist die Steuereinrichtung ausgebildet, den zweiten Stellantrieb so anzusteuern, dass der Rumpfkörper im Wesentlichen in einer vorgegebenen raumfesten Orientierung verbleibt; diese Weiterbildung ist insbesondere von Vorteil, wenn im Rumpfkörper eine Sensorik vorgesehen ist, die besonders exakte Messergebnisse für den Fall produziert, dass der Rumpfkörper in einer vorgegebenen raumfesten Orientierung verbleibt.

Bevorzugt kann eine gemeinsame Steuereinrichtung vorgesehen sein, die ausgebildet ist, die ersten und zweiten Stellantriebe so anzusteuern, dass der Rumpfkörper im Wesentlichen in einer vorgegebenen raumfesten Orientierung verbleibt.

Der Rumpfkörper ist zur Aufnahme von Nutzlast ausgebildet. Der Rumpfkörper weist einen ersten Abschnitt auf, der sich von der ersten Schwenkachse in einer ersten Richtung erstreckt und zur Aufnahme von Nutzlast vorgesehen und insbesondere als Gondel ausgebildet ist, sowie einen zweiten Abschnitt auf, der sich von der ersten Schwenkachse in einer zur ersten Richtung winklig orientierten, insbesondere entgegengesetzten, zweiten Richtung erstreckt und den Stellantrieb zumindest teilweise eine Energiebereitstellungseinrichtung für die Stellantriebe enthält. Hiernach kann wahlweise der erste Abschnitt vor der ersten Schwenkachse und der zweite Abschnitt hinter der ersten Schwenkachse oder umgekehrt der erste Abschnitt hinter der ersten Schwenkachse und der zweite Abschnitt vor der ersten Schwenkachse liegen.

Ferner kann der Rumpfkörper derart aerodynamisch geformt sein, dass er im Flugbetrieb einen Auftrieb erzeugt.

Schließlich kann sowohl gemäß dem ersten Aspekt der Erfindung oder dem zweiten Aspekt der Erfindung als auch bei einer Kombination der beiden Aspekte der Tragkörper derart aerodynamisch geformt sein, dass er im Flugbetrieb einen Auftrieb erzeugt, und hierzu insbesondere die Form eines Flügels aufweisen.

Nachfolgend wird ein bevorzugtes Ausführungsbeispiel der Erfindung anhand der beiliegenden Zeichnungen näher erläutert. Es zeigen:
- Fig. 1: eine perspektivische Draufsicht auf ein Fluggerät gemäß eines bevorzugten Ausführungsbeispiels mit den Rotorarmen und der Gondel jeweils in einer neutralen Stellung gegenüber dem Joch;
- Fig. 2: eine Seitenansicht auf das Fluggerät von Fig. 1 mit den Rotorarmen und der Gondel jeweils in der neutralen Stellung gegenüber dem Joch;
- Fig. 3: die Seitenansicht von Fig. 2, bei welcher der Rotorarm gegenüber dem Joch und der Gondel aus der neutralen Stellung heraus verschwenkt ist;
- Fig. 4: eine Vorderansicht auf das Fluggerät von Fig. 1 mit den Rotorarmen und dem Joch jeweils in einer neutralen Stellung gegenüber der Gondel;
- Fig. 5: die Vorderansicht von Fig. 4, bei welcher das Joch gegenüber der Gondel aus der neutralen Stellung heraus verschwenkt ist, und
- Fig. 6: eine vergrößerte Einzelansicht der von Joch und Gondel gebildeten Baugruppe schematisch im Längsschnitt gemäß einem ersten bevorzugten Ausführungsbeispiel (Fig. 6a) und einem zweiten bevorzugten Ausführungsbeispiel (Fig. 6b).

In den Figuren ist ein Fluggerät gemäß einem bevorzugten Ausführungsbeispiel abgebildet, bei dem es sich insbesondere um eine Drohne handelt.

Das Fluggerät weist einen Tragkörper 2 auf, der alternativ auch als "Mittelstück" oder "Joch" bezeichnet wird, wobei nachfolgend der Begriff "Joch" verwendet wird. Das Joch 2 besteht im dargestellten Ausführungsbeispiel aus einem länglichen Körper, an dessen beiden Enden 2a jeweils ein Arm 4 angeordnet ist. Die Arme 4 sind an den Enden 2a des Jochs 2 um eine erste Schwenkachse 6 schwenkbar gelagert, welche in Längsrichtung des Jochs 2 verläuft. Im dargestellten Ausführungsbeispiel erstrecken sich die beiden Arme 4 parallel zueinander und rechtwinklig zum Joch 2.

An den beiden Enden 4a jedes Armes 4 ist ein Propulsionsantrieb 8 angeordnet. Demnach handelt es sich bei den Armen 4 um Tragarme zur Lagerung der Propulsionsantriebe 8 an deren Enden 4a. Im dargestellten Ausführungsbeispiel werden als Propulsionsantriebe 8 Rotorantriebe verwendet, die jeweils zwei übereinanderliegende Rotorflügel 8a aufweisen, deren Rotation einen Propulsionsschub in Richtung des Pfeils 8b erzeugen. Dabei rotieren die beiden Rotorflügel 8a um eine gemeinsame Rotationsachse 8c, die sich somit in Propulsionsrichtung 8b erstreckt. Zum rotatorischen Antrieb der Rotorblätter 8a enthalten die Propulsionsantriebe 8 jeweils einen nicht näher bezeichneten Motor.

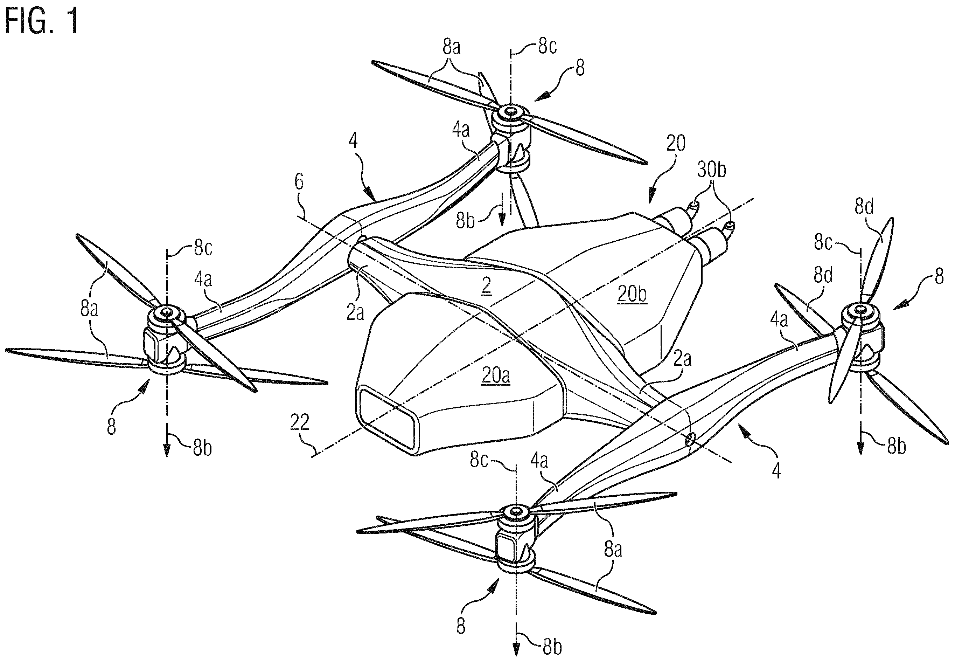

Wie Fig. 1 ferner erkennen lässt, sind die Arme 4 in der Mitte zwischen den an deren Enden 4a angeordneten Propulsionsantrieben 8 um die erste Schwenkachse 6 gelagert. Demnach ist im dargestellten Ausführungsbeispiel der Querabstand zwischen der ersten Schwenkachse 6 und der Rotationsachse 8c des einen Propulsionsantriebes 8 im Wesentlichen identisch mit dem Querabstand zur Rotationsachse 8c des gegenüberliegenden anderen Propulsionsantriebes 8. Im dargestellten Ausführungsbeispiel haben die beiden Arme 4 dieselbe Länge, sodass bei jedem Arm 4 der Abstand zwischen den Rotationsachsen 8c gleich ist. Ferner verlaufen die Rotationsachsen 8c der beiden Propulsionseinheiten 8 eines jeden Armes 4 parallel zueinander und sind rechtwinklig zur Längserstreckung des Armes 4 und des Weiteren rechtwinklig zur ersten Schwenkachse 6 orientiert, was somit auch gleichermaßen für die Propulsionsrichtung 8b gilt. Eine Verschwenkung um die erste Schwenkachse 6 führt zu einer Schwenkbewegung sowohl des Armes 4 nach Art eines Doppelhebels als auch der Rotationsachsen 8c entlang einer rechtwinklig gegenüber der ersten Schwenkachse 6 aufgespannten virtuellen (in den Figuren nicht abgebildeten) Schwenkebene. Wegen der unveränderlichen relativen Orientierung der Propulsionsrichtungen 8b der Propulsionsantriebe 8 gegenüber dem jeweiligen Arm 4 bleibt die relative Orientierung der Propulsionsrichtungen 8b gegenüber dem Arm 4 und somit auch in Bezug auf die erwähnte virtuelle Schwenkachse in jeder Schwenklage des Armes 4 konstant. Dies bedeutet, dass eine zusätzliche Verschwenkung der Propulsionsantriebe 8 mit ihrer Propulsionsrichtung 8b um eine winklig gegenüber dem jeweiligen Arm 4 und um eine winklig gegenüber der ersten Schwenkachse 6 verlaufende weitere Schwenkachse ausgeschlossen ist, sodass die Propulsionsantriebe 8 lediglich um die erste Schwenkachse 6 verschwenkbar sind und somit diese Schwenkbewegung die einzige Schwenkbewegung der Propulsionsantriebe 8 bildet.

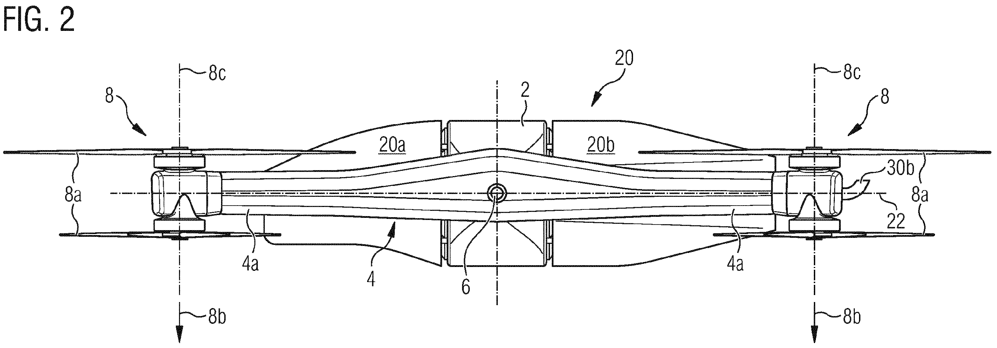

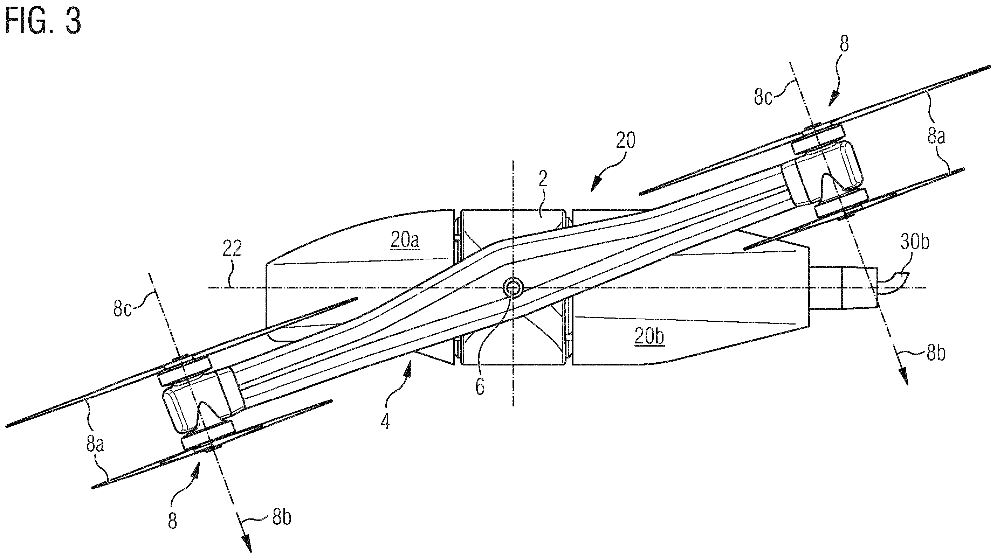

Dies lässt insbesondere ein Vergleich von Fig. 2 mit Fig. 3 erkennen, in dem die besagte virtuelle Schwenkebene in der Zeichnungsebene dieser beiden Figuren liegt.

Wie Fig. 1 ferner erkennen lässt, weist das dargestellte Fluggerät zusätzlich eine Gondel 20 auf, die am Joch 2 angeordnet ist. Dabei ist die Gondel 2 gegenüber dem Joch 2 um eine zweite Schwenkachse 22 schwenkbar gelagert, die im dargestellten Ausführungsbeispiel rechtwinklig zur ersten Schwenkachse 6 orientiert ist. Ferner schneidet die zweite Schwenkachse 22 die erste Schwenkachse 6 an einer Stelle, deren Abstand zu dem einen Ende 2a des Jochs 2 und somit zu dem daran schwenkbar gelagerten Arm 4 gleich dem Abstand zu dem gegenüberliegenden anderen Ende 2a des Jochs 2 und dem dort schwenkbar gelagerten anderen Arm 4 ist, wodurch die Gondel 20 mittig am Joch 2 schwenkbar gelagert ist.

In den Fig. 1, 2 und 4 ist das Fluggerät in einem Zustand abgebildet, in dem sich die Arme 4 und die Gondel 20 gegenüber dem Joch 2 in einer unverschwenkten und somit neutralen Stellung befinden. In diesem Betriebszustand liegen die erste Schwenkachse 6 und die zweite Schwenkachse 22 sowie die Arme 4 in einer gemeinsamen virtuellen Ebene, wie Fig. 1 erkennen lässt, obwohl diese gemeinsame virtuelle Ebene nicht abgebildet ist.

In Fig. 3 ist das Fluggerät in einem Betriebszustand abgebildet, in dem der dort abgebildete Arm 4 um die (rechtwinklig gegenüber der Zeichnungsebene von Fig. 3 orientierte) erste Schwenkachse 6 aus der neutralen Stellung heraus in einem Winkel gegenüber dem Joch 2 und der zweiten Schwenkachse 22 verschwenkt ist.

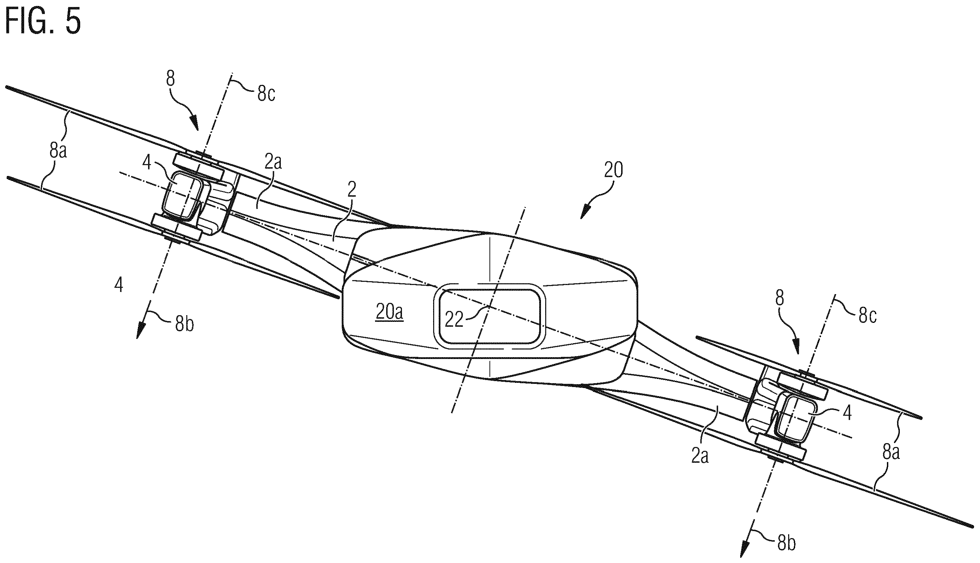

In Fig. 5 ist das Fluggerät in einem Betriebszustand abgebildet, in dem das Joch 2 um die (rechtwinklig gegenüber der Zeichnungsebene von Fig. 5 orientierte) zweite Schwenkachse 22 aus der neutralen Stellung heraus in einem Winkel gegenüber der Gondel 20 verschwenkt ist.

Die beiden Arme 4 sind unabhängig voneinander um die erste Schwenkachse 6 verschwenkbar, der insbesondere die Funktion einer Nick- bzw. Pitch-Achse zukommt. Somit können die beiden Arme eine unterschiedlich stark geneigte oder auch einander entgegengesetzte Schwenkstellung in Bezug auf das Joch 2 und die Gondel 20 einnehmen. Ebenfalls ist das Joch 2 unabhängig von den Schwenkbewegungen der Arme 4 um die zweite Schwenkachse 22 verschwenkbar, der insbesondere die Funktion einer Rollachse zukommt.

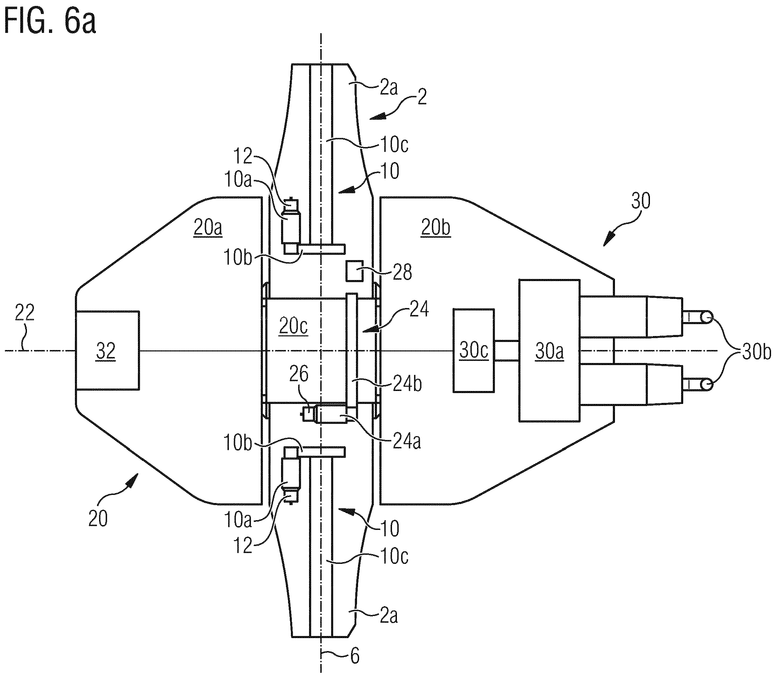

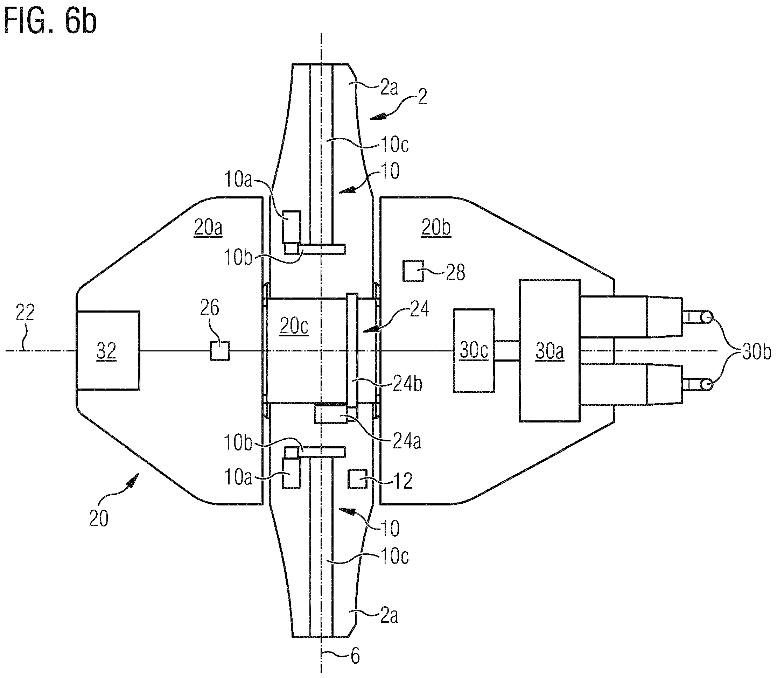

Für die unabhängige Verstellung der beiden Arme 4 um die erste Schwenkachse 6 und der Gondel 20 um die zweite Schwenkachse 22 sind, wie in den Figuren 6a und b schematisch abgebildet ist, getrennte Stellantriebe 10, 24 vorgesehen, die jeweils bevorzugt elektrisch arbeiten. Beispielsweise können die Stellantriebe jeweils mindestens zwei Motoren mit Getriebe zur Erzielung einer Redundanz und Eliminierung von Getriebespiel sowie eine Bremse, die das Getriebe blockiert und insbesondere mit Elektromagneten eingeschaltet wird, aufweisen. Dabei sind die Stellantriebe 10, 24 bevorzugt innerhalb des Jochs 2 angeordnet.

Bei den in den Figuren 6a und b schematisch abgebildeten Ausführungsbeispielen weisen die ersten Stellantriebe 10 zur voneinander unabhängigen Verstellung der beiden Arme 4 jeweils einen Motor 10a auf, der über ein Getriebe 10b, beispielsweis ein Riemen- und/oder Zahnradgetriebe, einen um die erste Schwenkachse 6 drehbar gelagerten Schaft 10c rotierend antreibt, welcher mit dem jeweiligen Arm 4 drehfest verbunden ist. Anstelle des Getriebes 10b kann auch ein Direktantrieb vorgesehen sein, wonach der Motor 10a den Schaft 10c direkt antreibt.

Wie die Figuren 1 sowie 6a und b ferner erkennen lassen, ist im dargestellten Ausführungsbeispiel die Gondel 20 in einen vorderen Abschnitt 20a und einen hinteren Abschnitt 20b unterteilt. Diese beiden Abschnitte 20a und 20b sind im dargestellten Ausführungsbeispiel über ein Mittelstück 20c drehfest miteinander verbunden, welches als Zylinder ausgebildet ist, dessen Mittelachse mit der zweiten Schwenkachse 22 zusammenfällt. Um dieses zylindrische Mittelstück 20c ist das Joch 2 drehbar gelagert. Bei Verwendung eines treibstoffbasierten Antriebs kann das zylindrische Mittelstück 20c als Tank für flüssige oder gasförmige Treibstoffe ausgeführt sein. Bei den in den Figuren 6a und b schematisch abgebildeten Ausführungsbeispielen weist der zweite Stellantrieb 24 zur Verstellung des Jochs 2 gegenüber der Gondel 20 ebenfalls einen Motor 24a auf, der über ein Getriebe 24b, beispielsweis ein Riemen- und/oder Zahnradgetriebe, das Joch 2 mit einer Drehbewegung gegenüber dem Mittelstück 20c der Gondel 20 um die zweite Schwenkachse 22 beaufschlagt. Anstelle des Getriebes 24b kann auch ein Direktantrieb vorgesehen sein, wonach der Motor 24a unmittelbar das Joch 2 mit einer Drehbewegung gegenüber dem Mittelstück 20c der Gondel 20 beaufschlagt. Ferner sind Sensoren 12, 26 vorgesehen, die die Schwenkstellung der Arme 4 im Raum und/oder gegenüber dem Joch 2 und die Schwenkstellung des Jochs 2 im Raum und/oder gegenüber der Gondel 20 erfassen. Bei dem in Fig. 6a abgebildeten Ausführungsbeispiel sind die Sensoren 12, 26 am Motor 10a bzw. 24a der Stellantriebe 10, 24 angeordnet und erfassen die Rotation des Motors 10a bzw. 24a, so dass bei diesem Ausführungsbeispiel die Sensoren 12, 26 bevorzugt als Inkrementalgeber ausgebildet sind. Alternativ ist es aber auch beispielsweise denkbar, die Sensoren 12, 26 getrennt von den Antrieben 10a, 24a der ersten und zweiten Stellantriebe 10, 24 anzuordnen, wie schematisch in Fig. 6b abgebildet ist. Bei dem in Fig. 6b gezeigten Ausführungsbeispiel ist vorzugsweise der erste Sensor 12 zur direkten Erfassung der Drehstellung des Schaftes 10c und somit des zugehörigen Armes 4 vorgesehen, wobei die Erfassung der Drehstellung insbesondere auch berührungslos stattfinden kann. Ähnliches gilt auch für den zweiten Sensor 26, der die relative Schwenkstellung des Jochs 2 gegenüber der Gondel 20 im Wesentlichen direkt erfasst, und zwar vorzugsweise auf berührungslose Weise, und anders als der erste Sensor 12 nicht im Joch 2, sondern im ersten Abschnitt 20a der Gondel 20 angeordnet ist. Alternativ ist es aber selbstverständlich auch denkbar, den zweiten Sensor 26 ebenfalls innerhalb des Jochs 2 anzuordnen. Ebenfalls ist es auch denkbar, dass zumindest ein Teil der Sensoren 12, 26 zusätzlich oder alternativ zur Positions- bzw. Lageerfassung nach Art eines Gyro-Sensors vorgesehen sind oder als Gyro-Sensor ausgebildet sind, um die Schwenkstellung der Arme 4 gegenüber dem Joch 2 und die Schwenkstellung des Jochs 2 gegenüber der Gondel 20 im Hinblick auf eine raumfeste Bezugsgröße wie beispielsweise die Erdvertikale und/oder die Schwerkraft zu ermitteln. Insbesondere sollten in Abweichung von den schematischen Abbildungen der Fig. 6 weitere Positions- bzw. Lagesensoren zusätzlich zu den Sensoren 12 oder alternativ die Sensoren 12 als Positions- bzw. Lagesensoren in den Armen 4 angeordnet sein, um deren Schwenkstellung gegenüber dem Joch 2 im Hinblick auf eine raumfeste Bezugsgröße wie beispielsweise die Erdvertikale und/oder die Schwerkraft zu ermitteln. Selbstverständlich können die Sensoren 12, 26 auch an anderer Stelle gegenüber den beispielhaften Abbildungen der Figuren 6a und b innerhalb des Fluggerätes angeordnet sein, sofern sie auch dann weiterhin in der Lage sind, die relative Schwenkstellung zu erfassen.

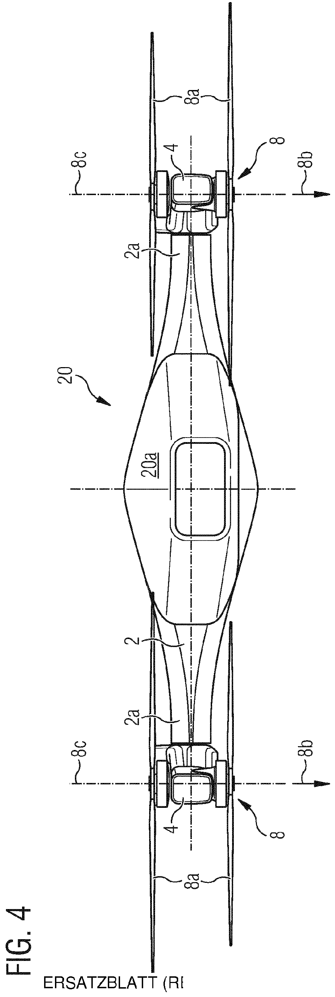

Des Weiteren ist eine Steuereinrichtung 28 vorgesehen, die unter Verwendung der Ausgangssignale von den Sensoren die ersten Stellantriebe 10 für die Arme 4 so ansteuert, dass die Arme 4 eine bestimmte Schwenkstellung im Raum und/oder gegenüber dem Joch 2 um die erste Schwenkachse 6 einnehmen, und den zweiten Stellantrieb 24 zum Verschwenken des Jochs 2 gegenüber der Gondel 20 so ansteuert, dass das Joch 2 eine bestimmte Schwenkstellung im Raum und/oder gegenüber der Gondel 20 um die zweite Schwenkachse 22 einnimmt. Bei dem in Fig. 6a abgebildeten Ausführungsbeispiel ist die Steuereinrichtung 28 innerhalb des Jochs 2 angeordnet, während bei dem in Fig. 6b abgebildeten Ausführungsbeispiel die Steuereinrichtung 28 innerhalb der Gondel 20 angeordnet ist.Ein vorteilhafter Flugzustand des beschriebenen Fluggerätes besteht insbesondere darin, dass die Steuereinrichtung 28 die Stellantriebe 10, 24 so ansteuert, dass die Gondel 20 bei Verschwenken der Arme 4 und/oder des Jochs 2 in einer raumfesten Orientierung verbleibt, wie ein Vergleich der Fig. 3 und 5 mit den Fig. 2 und 4 erkennen lässt.

Zur Stromversorgung ist im dargestellten Ausführungsbeispiel eine Stromerzeugungseinrichtung 30 vorgesehen, die, wie in den Figuren 6a und b schematisch abgebildet ist, einen Verbrennungsmotor 30a mit einer aus dem hinteren Abschnitt 20b der Gondel 20 herausragenden Auspuffanlage 30b und einen elektrischen Generator 30c aufweist, welcher zur Stromerzeugung vom Verbrennungsmotor 30a angetrieben wird.

Die Gondel 20 dient zur Aufnahme von Nutzlast, zu der grundsätzlich auch die zuvor beschriebene Stromerzeugungseinrichtung 30 zählt. Insbesondere handelt es sich bei der Nutzlast um Sensorik zur positions-, lage- und maßgetreuen Erfassung und Modellierung von Bauwerken, Infrastruktur und/oder anderen (natur-)räumlichen Strukturen. Eine solche Nutzlast ist in den Figuren 6a und b beispielsweise im vorderen Abschnitt 20a der Gondel 20 schematisch gezeigt.

Schließlich kann die Gondel 20 derart aerodynamisch geformt sein, dass sie im Flugbetrieb einen Auftrieb erzeugt. Ebenfalls kann das Joch 2 derart aerodynamisch geformt sein, dass es im Flugbetrieb einen Auftrieb erzeugt, wozu es insbesondere die Form eines Flügels aufweisen kann.

## Patentansprüche

1. Fluggerät, insbesondere Drohne mit
- einem Tragkörper (2),
- mindestens zwei am Tragkörper (2) voneinander beabstandet angeordneten Propulsionsanordnungen (4, 8), die ausgebildet sind, einen Propulsionsschub in einer Propulsionsrichtung (8b) zu erzeugen,
- einem Rumpfkörper (20), der am Tragkörper (2) um eine zweite Schwenkachse (22) schwenkbar gelagert und zur Aufnahme von Nutzlast (30, 32) ausgebildet ist, und
- einem zweiten Stellantrieb (24), der ausgebildet ist, den Tragkörper (2) gegenüber dem Rumpfkörper (20) zu verschwenken,
- wobei der Rumpfkörper (20) einen ersten Abschnitt (20a), der sich von einer ersten Schwenkachse (6) am Tragkörper zur Verschwenkung der Propulsionsanordnungen (4, 8) in einer ersten Richtung erstreckt und zur Aufnahme von Nutzlast (30) vorgesehen und insbesondere als Gondel ausgebildet ist, und einen zweiten Abschnitt aufweist, der sich von der ersten Schwenkachse (6) in einer zur ersten Richtung winklig orientierten, insbesondere entgegengesetzten, zweiten Richtung erstreckt und zumindest teilweise eine Energieversorgungseinrichtung (30) enthält.

2. Fluggerät nach Anspruch 1,
- wobei die Propulsionsanordnungen (4, 8) am Tragkörper (2) unabhängig voneinander jeweils um eine winklig zur Propulsionsrichtung (8b) verlaufende erste Schwenkachse (6) schwenkbar gelagert sind, und
- ein erster Stellantrieb (10) vorgesehen ist, die Propulsionsanordnungen (4, 8) unabhängig voneinander um die erste Schwenkachse (6) zu verschwenken,

3. Fluggerät nach Anspruch 2, bei welchem die relative Orientierung der Propulsionsrichtung (8b) der Propulsionsanordnungen (4, 8) in Bezug auf eine rechtwinklig gegenüber der ersten Schwenkachse (6) aufgespannte virtuelle Schwenkebene in jeder Schwenklage der Propulsionsanordnungen (4, 8) konstant bleibt.

4. Fluggerät nach Anspruch 2 oder 3, bei welchem die Propulsionsanordnungen (4, 8) am Tragkörper (2) um eine im Wesentlichen rechtwinklig zur Propulsionsrichtung (8b) verlaufende erste Schwenkachse (6) schwenkbar gelagert sind.

5. Fluggerät nach den Ansprüchen 3 und 4, bei welchem die Propulsionsrichtung (8b) der Propulsionsanordnungen (4, 8) in der rechtwinklig gegenüber der ersten Schwenkachse (6) aufgespannten virtuellen Schwenkebene liegt oder in jeder Schwenkstellung der Propulsionsanordnungen (4, 8) parallel zu dieser virtuellen Schwenkebene orientiert ist.

6. Fluggerät nach mindestens einem der Ansprüche 2 bis 5, bei welchem die Propulsionsanordnungen (4, 8) um eine gemeinsame erste Schwenkachse (6) schwenkbar gelagert sind.

7. Fluggerät nach mindestens einem der Ansprüche 2 bis 6, bei welchem mindestens eine Propulsionsanordnung (4, 8) mindestens einen Propulsionsantrieb (8) aufweist, der ausgebildet ist, den Propulsionsschub in der Propulsionsrichtung (8b) zu erzeugen.

8. Fluggerät nach Anspruch 7, bei welcher mindestens eine Propulsionsanordnung (4, 8) ein Tragelement (4) und zwei voneinander beabstandet am Tragelement (4) angeordnete Propulsionsantriebe (8) aufweist, wobei das Tragelement (4) an einer Stelle zwischen den beiden Propulsionsantrieben (8) um die erste Schwenkachse (6) schwenkbar gelagert ist.

9. Fluggerät nach Anspruch 8, bei welchem das Tragelement (4) an einer Stelle, die im Wesentlichen den gleichen Abstand zu beiden Propulsionsantrieben (8) aufweist, um die erste Schwenkachse (6) schwenkbar gelagert ist.

10. Fluggerät nach Anspruch 8 oder 9, bei welchem die relative Orientierung der Propulsionsrichtung (8b) der Propulsionsantriebe (8) gegenüber dem Tragelement (4) in jeder Schwenklage der Propulsionsanordnungen (4, 8) konstant bleibt.

11. Fluggerät nach mindestens einem der Ansprüche 7 bis 10, bei welchem mindestens eine Propulsionsanordnung (4, 8) mindestens zwei Propulsionsantriebe (8) aufweist, deren Propulsionsrichtungen (8b) parallel zueinander orientiert sind.

12. Fluggerät nach mindestens einem der Ansprüche 2 bis 11, mit
- einer ersten Sensoreinrichtung (12), die ausgebildet ist, die Schwenkstellung der Propulsionsanordnungen (4, 8) im Raum und/oder gegenüber dem Tragkörper (2) zu erfassen, und
- einer Steuereinrichtung (28), die ausgebildet ist, unter Verwendung der Signale von der ersten Sensoreinrichtung (12) den ersten Stellantrieb (10) so anzusteuern, dass die Propulsionsanordnungen (4, 8) eine bestimmte Schwenkstellung im Raum und/oder gegenüber dem Tragkörper (2) einnehmen.

13. Fluggerät nach einem der Ansprüche 2 bis 12, bei welchem die zweite Schwenkachse (22) winklig zur ersten Schwenkachse (6), vorzugsweise im Wesentlichen rechtwinklig zur ersten Schwenkachse (6) orientiert ist.

14. Fluggerät nach einem der vorangegangenen Ansprüche, bei welchem der Rumpfkörper (20) an einer Stelle des Tragkörpers (2) schwenkbar gelagert ist, welche sich im Wesentlichen im gleichen Abstand zu den beiden Propulsionsanordnungen (4, 8) befindet.

15. Fluggerät nach einem der vorangegangenen Ansprüche, bei welchem die zweite Schwenkachse (6) winklig gegenüber der Propulsionsrichtung (8b), vorzugsweise im Wesentlichen rechtwinklig gegenüber der Propulsionsrichtung (8b) orientiert ist.

16. Fluggerät nach einem der vorangegangenen Ansprüche, mit
- einer zweiten Sensoreinrichtung (26), die ausgebildet ist, die Schwenkstellung des Tragkörpers (2) im Raum und/oder gegenüber dem Rumpfkörper (20) zu erfassen, und
- einer Steuereinrichtung (28), die ausgebildet ist, unter Verwendung der Signale von der zweiten Sensoreinrichtung den zweiten Stellantrieb so anzusteuern, dass der Tragkörper (2) eine bestimmte Schwenkstellung im Raum und/oder gegenüber dem Rumpfkörper (20) einnimmt.

17. Fluggerät nach Anspruch 16, bei welchem die Steuereinrichtung (28) ausgebildet ist, den zweiten Stellantrieb 24 so anzusteuern, dass der Rumpfkörper (20) im Wesentlichen in einer vorgegebenen raumfesten Orientierung verbleibt.

18. Fluggerät nach den Ansprüchen 12 und 17, bei welchem eine gemeinsame Steuereinrichtung (28) vorgesehen ist, die ausgebildet ist, die ersten und zweiten Stellantriebe (10, 24) so anzusteuern, dass der Rumpfkörper (20) im Wesentlichen in einer vorgegebenen raumfesten Orientierung verbleibt.

19. Fluggerät nach einem der vorangegangenen Ansprüche, bei welchem der Rumpfkörper (20) derart aerodynamisch geformt ist, dass er im Flugbetrieb einen Auftrieb erzeugt und/oder der Tragkörper (2) derart aerodynamisch geformt ist, dass er im Flugbetrieb einen Auftrieb erzeugt, und insbesondere die Form eines Flügels hat.

## Claims

1. A flying apparatus, in particular a drone, including
- a supporting body (2),
- at least two propulsion arrangements (4, 8) arranged at a distance from each other on the supporting body (2), which are designed to generate a propulsive thrust in a direction of propulsion (8b),
- a fuselage body (20) mounted on the support structure (2) so as to be pivotable about a second pivot axis (22) and designed to accommodate a load (30, 32), and
- a second actuator (24) designed to pivot the supporting body (2) relative to the fuselage body (20),
- wherein the fuselage body (20) has a first section (20a), which extends in a first direction from a first pivot axis (6) for pivoting the propulsion arrangements (4, 8) on the supporting body, which is designed to accommodate a load (30) and which is in particular designed as a nacelle, and a second section, which extends from the first pivot axis (6) in a second direction oriented at an angle and in particular opposite to the first direction and which at least partially contains an energy supply device (30).

2. The flying apparatus according to claim 1,
- wherein the propulsion arrangements (4, 8) are mounted on the supporting body (2) independently of one another so as to be respectively pivotable about a first pivot axis (6) that extends at an angle relative to the direction of propulsion (8b), and
- a first actuator (10) is provided to pivot the propulsion arrangements (4, 8) independently of one another about the first pivot axis (6).

3. The flying apparatus according to claim 2, wherein the relative orientation of the direction of propulsion (8b) of the propulsion arrangements (4, 8) remains constant in relation to a virtual pivot plane stretching orthogonally to the first pivot axis (6) in each pivot position of the propulsion arrangements (4, 8).

4. The flying apparatus according to claim 2 or 3, wherein the propulsion arrangements (4, 8) are mounted on the supporting body (2) so as to be pivotable about a first pivot axis (6) extending essentially orthogonally to the direction of propulsion (8b).

5. The flying apparatus according to claims 3 and 4, wherein the direction of propulsion (8b) of the propulsion arrangements (4, 8) lies in the virtual pivot plane stretching orthogonally to the first pivot axis (6) or is oriented parallel to this virtual pivot plane in every pivot position of the propulsion arrangements (4, 8).

6. The flying apparatus according to at least one of claims 2 to 5, wherein the propulsion arrangements (4, 8) are mounted so as to be pivotable about a common first pivot axis (6).

7. The flying apparatus according to at least one of claims 2 to 6, wherein at least one propulsion arrangement (4, 8) includes at least one propulsion unit (8) designed to generate the propulsion in the direction of propulsion (8b).

8. The flying apparatus according to claim 7, wherein at least one propulsion arrangement (4, 8) includes a support element (4) and two propulsion units (8) arranged at a distance from each other on the support element (4), wherein the support element (4) is mounted so as to be pivotable about the first pivot axis (6) at a point between the two propulsion units (8).

9. The flying apparatus according to claim 8, wherein the support element (4) is mounted so as to be pivotable about the first pivot axis (6) at a point that is essentially equidistant from the two propulsion units (8).

10. The flying apparatus according to claim 8 or 9, wherein the relative orientation of the direction of propulsion (8b) of the propulsion units (8) in relation to the support element (4) remains constant in every pivot position of the propulsion arrangements (4, 8).

11. The flying apparatus according to at least one of claims 7 to 10, wherein at least one propulsion arrangement (4, 8) includes at least two propulsion units (8), wherein the directions of propulsion (8b) of the two propulsion units (8) are oriented parallel to each other.

12. The flying apparatus according to at least one of claims 2 to 11, including
- a first sensor device (12) designed to detect the pivot position of the propulsion arrangements (4, 8) in space and/or relative to the supporting body (2), and
- a control device (28) designed to control the first actuator (10) using the signals from the first sensor device (12) in such a manner that the propulsion arrangements (4, 8) assume a specific pivot position in space and/or relative to the supporting body (2).

13. The flying apparatus according to one of claims 2 to 12, wherein the second pivot axis (22) is oriented at an angle to the first pivot axis (6), preferably essentially orthogonally to the first pivot axis (6).

14. The flying apparatus according to one of the preceding claims, wherein the fuselage body (20) is pivotably mounted at a point on the supporting body (2) that is essentially equidistant from the two propulsion arrangements (4, 8).

15. The flying apparatus according to one of the preceding claims, wherein the second pivot axis (6) is oriented at an angle to the direction of propulsion (8b), preferably essentially orthogonally to the direction of propulsion (8b).

16. The flying apparatus according to one of the preceding claims, including
- a second sensor device (26) designed to detect the pivot position of the supporting body (2) in space and/or relative to the fuselage body (20), and
- a control device (28) designed to control the second actuator using the signals from the second sensor device in such a manner that the supporting body (2) assumes a specific pivot position in space and/or relative to the fuselage body (20).

17. The flying apparatus according to claim 16, wherein the control device (28) is designed to control the second actuator (24) in such a manner that the fuselage body (20) remains essentially in a predetermined, spatially fixed orientation.

18. The flying apparatus according to claims 12 and 17, wherein a common control device (28) is provided, which is designed to control the first and second actuators (10, 24) in such a manner that the fuselage body (20) remains essentially in a predetermined, spatially fixed orientation.

19. The flying apparatus according to one of the preceding claims, wherein the fuselage body (20) is aerodynamically shaped in such a manner that it generates lift in flight and/or the supporting body (2) is aerodynamically shaped in such a manner that it generates lift in flight, and in particular has the shape of a wing.

## Revendications

1. Engin volant, en particulier drone avec
- un corps porteur (2),
- au moins deux ensembles de propulsion (4, 8) disposés à distance l'un de l'autre sur le corps porteur (2), qui sont réalisés pour générer une poussée de propulsion dans une direction de propulsion (8b),
- un corps de fuselage (20), qui est monté sur le corps porteur (2) de manière pivotante autour d'un deuxième axe de pivotement (22) et est réalisé pour recevoir une charge utile (30, 32), et
- un deuxième actionneur (24), qui est réalisé pour faire pivoter le corps porteur (2) par rapport au corps de fuselage (20),
- dans lequel le corps de fuselage (20) présente une première section (20a), qui s'étend d'un premier axe de pivotement (6) sur le corps porteur pour le pivotement des ensembles de propulsion (4, 8) dans une première direction et est prévu pour recevoir une charge utile (30) et est réalisée en particulier comme une nacelle, et une deuxième section, qui s'étend à partir du premier axe de pivotement (6) dans une deuxième direction orientée de manière angulaire par rapport à la première direction, en particulier opposée, et contient au moins en partie un dispositif d'alimentation en énergie (30).

2. Engin volant selon la revendication 1,
- dans lequel les ensembles de propulsion (4, 8) sont montés de manière pivotante autour d'un premier axe de pivotement (6) s'étendant selon un angle par rapport à la direction de propulsion (8b) sur le corps porteur (2) indépendamment les uns des autres , et
- un premier actionneur (10) est prévu pour faire pivoter les ensembles de propulsion (4, 8) indépendamment les uns des autres autour du premier axe de pivotement (6).

3. Engin volant selon la revendication 2, dans lequel l'orientation relative de la direction de propulsion (8b) des ensembles de propulsion (4, 8) reste constante par rapport à un plan de pivotement virtuel formé à angle droit par rapport au premier axe de pivotement (6) dans chaque position de pivotement des ensembles de propulsion (4, 8).

4. Engin volant selon la revendication 2 ou 3, dans lequel les ensembles de propulsion (4, 8) sont montés de manière pivotante autour d'un premier axe de pivotement (6) s'étendant sensiblement à angle droit par rapport à la direction de propulsion (8b) sur le corps porteur (2).

5. Engin volant selon les revendications 3 et 4, dans lequel la direction de propulsion (8b) des ensembles de propulsion (4, 8) se trouve dans le plan de pivotement virtuel formé à angle droit par rapport au premier axe de pivotement (6) ou est orientée parallèlement à ce plan de pivotement virtuel dans chaque position de pivotement des ensembles de propulsion (4, 8).

6. Engin volant selon au moins l'une quelconque des revendications 2 à 5, dans lequel les ensembles de propulsion (4, 8) sont montés de manière pivotante autour d'un premier axe de pivotement commun (6).

7. Engin volant selon au moins l'une quelconque des revendications 2 à 6, dans lequel au moins un ensemble de propulsion (4, 8) présente au moins un entraînement de propulsion (8) qui est réalisé pour générer la poussée de propulsion dans la direction de propulsion (8b).

8. Engin volant selon la revendication 7, dans lequel au moins un ensemble de propulsion (4, 8) comprend un élément porteur (4) et deux entraînements de propulsion (8) disposés à distance l'un de l'autre sur l'élément porteur (4), dans lequel l'élément porteur (4) est monté de manière pivotante autour du premier axe de pivotement (6) sur un endroit entre les deux entraînements de propulsion (8).

9. Engin volant selon la revendication 8, dans lequel l'élément porteur (4) est monté de manière pivotante autour du premier axe de pivotement (6) sur un endroit qui présente sensiblement la même distance par rapport aux deux entraînements de propulsion (8).

10. Engin volant selon la revendication 8 ou 9, dans lequel l'orientation relative de la direction de propulsion (8b) des entraînements de propulsion (8) par rapport à l'élément porteur (4) reste constante dans chaque position de pivotement des ensembles de propulsion (4, 8).

11. Engin volant selon au moins l'une quelconque des revendications 7 à 10, dans lequel au moins un ensemble de propulsion (4, 8) présente au moins deux entraînements de propulsion (8), dont les directions de propulsion (8b) sont orientées parallèlement l'une par rapport à l'autre.

12. Engin volant selon au moins l'une quelconque des revendications 2 à 11, avec
- un premier dispositif de capteur (12), qui est réalisé pour détecter la position de pivotement des ensembles de propulsion (4, 8) dans l'espace et/ou par rapport au corps porteur (2), et
- un dispositif de commande (28), qui est réalisé pour commander le premier actionneur (10) en utilisant les signaux du premier dispositif de capteur (12) de telle sorte que les ensembles de propulsion (4, 8) prennent une certaine position de pivotement dans l'espace et/ou par rapport au corps porteur (2).

13. Engin volant selon l'une quelconque des revendications 2 à 12, dans lequel le deuxième axe de pivotement (22) est orienté selon un angle par rapport au premier axe de pivotement (6), de préférence sensiblement à angle droit par rapport au premier axe de pivotement (6).

14. Engin volant selon l'une quelconque des revendications précédentes, dans lequel le corps de fuselage (20) est monté de manière pivotante sur un endroit du corps porteur (2) qui se trouve sensiblement à la même distance des deux ensembles de propulsion (4, 8).

15. Engin volant selon l'une quelconque des revendications précédentes, dans lequel le deuxième axe de pivotement (6) est orienté selon un angle par rapport à la direction de propulsion (8b), de préférence sensiblement à angle droit par rapport à la direction de propulsion (8b).

16. Engin volant selon l'une quelconque des revendications précédentes, avec
- un deuxième dispositif de capteur (26), qui est réalisé pour détecter la position de pivotement du corps porteur (2) dans l'espace et/ou par rapport au corps de fuselage (20), et
- un dispositif de commande (28), qui est réalisé pour commander, en utilisant les signaux du deuxième dispositif de capteur, le deuxième actionneur de telle sorte que le corps porteur (2) prend une certaine position de pivotement dans l'espace et/ou par rapport au corps de fuselage (20).

17. Engin volant selon la revendication 16, dans lequel le dispositif de commande (28) est réalisé pour commander le deuxième actionneur (24) de telle sorte que le corps de fuselage (20) reste sensiblement dans une orientation fixe prédéfinie.

18. Engin volant selon les revendications 12 et 17, dans lequel un dispositif de commande commun (28) est prévu, qui est réalisé pour commander les premier et deuxième actionneurs (10, 24) de telle sorte que le corps de fuselage (20) reste sensiblement dans une orientation fixe prédéterminée.

19. Engin volant selon l'une quelconque des revendications précédentes, dans lequel le corps de fuselage (20) est formé de manière aérodynamique de manière à générer une portance en vol et/ou le corps porteur (2) est également formé de manière aérodynamique de manière à générer une portance en vol, et en particulier de manière à présenter la forme d'une aile.
